# EUROPEAN PATENT APPLICATION

(11) **EP 4 559 991 A1**
(43) Date of publication of application: **28.05.2025**
(21) Application number: 23211113.8
(22) Date of filing: 21.11.2023
(51) Int. Cl.: C09K 8/035, B01D 19/02, B01D 19/04

(54) **SHORT CHAIN ALKOXYLATES AS FOAM-CONTROLLING AGENTS**

(71) Applicant: Sasol Chemie GmbH & Co. KG, 20537 Hamburg (DE)
(72) Inventor: Breuer, Wolfgang, 41515 Grevenbroich (DE); Carboni, Valentina, 20138 Milano (IT); Pastorelli, Paola, 20138 Milano (IT)
(74) Representative: Müller Schupfner & Partner Patent- und Rechtsanwaltspartnerschaft mbB (Hamburg)

(57) **Abstract**

The present invention relates to alcohol alkoxylates and the use of such alcohol alkoxylates or mixtures as foam-controlling agents, to prevent foam formation and/or to defoam by their use. More specifically, the alcohol alkoxylates relate to short chain alcohol alkoxylates, having a low alkoxylation grade, to be used as additives for anti-foaming and/or foam destruction in gas and oilfield application areas. Further, the invention relates to an oil or gas recovering process by contacting a hydrocarbon-containing liquid with alcohol alkoxylates.

## Description

The present invention relates to alcohol alkoxylates or mixtures thereof and the use of such alcohol alkoxylates or mixtures as foam-controlling agents, to prevent foam formation and/or to defoam by their use. More specifically, the alcohol alkoxylates relate to short chain alcohol alkoxylates, having a low alkoxylation grade, to be used as additives for anti-foaming and/or foam destruction in gas and oilfield application areas. Further, the invention relates to an oil or gas recovering process by contacting a hydrocarbon-containing liquid with alcohol alkoxylates.

### BACKGROUND OF THE INVENTION AND DISCUSSION OF THE PRIOR ART

In various industrial processes, occurrence of foams creates troublesome environments. More specifically, foaming that occurs in oilfield processes such gas well deliquification (GWD) processes is a common problem that could lead to problems such as increased compression requirements and flooding that could cause oil platform shutdowns.

Considering the GWD process, these wells' production rates are significantly impacted when there is a build-up of liquids downhole in the casing and the tubing of the well. These liquids may originate from formation water, condensed water or hydrocarbon condensate. If this build-up occurs together with a lowering of the well pressure, the flow regime of the well might be affected in a negative way, up to a point where a hydrostatic lock occurs, and gas production will cease. In the case of GWD processes, chemical foamers (for example surfactants) are typically used to modify the physical properties of liquids such as surface tension, to create an artificial lift which subsequently will aid with unloading of gas from the well. Unfortunately, as discussed above, foaming has its own associated problems, and uncontrolled foaming will therefore need subsequent remedies.

Well known defoamers and antifoamers include amongst others silicone oils and fluorosilicones.

These compounds, used extensively in the oil and gas industry, have some distinct disadvantages however, such as high costs, limited solubility, reduced effectiveness in harsh conditions, limited biodegradation and the loss of catalytic performance in downstream refinery operations.

Silica (or silicon dioxide) are also commonly used as defoamers and/or antifoamers in various industrial processes. These compounds have unfortunately the potential for re-foaming (where silica particles become trapped in the foam structure), when the particles may act as nucleation sites for the reformation of foam. The silica particles also tend to settle and separate from the liquid phase, resulting in reduced performance.

Some block copolymers of lower alkylene glycols have also been described in the prior art as displaying defoaming and/or antifoaming properties. Their potential disadvantages include however reduced effectiveness at higher temperatures and sensitivity to shear forces, leading to breakdown of the polymer structure.

Various complex formulations containing a number of compounds have been described as efficient defoaming and antifoaming compositions for various application areas, such as WO91/00763 A1 where a combination of alkoxylated alcohols, silica and lower alkylene glycols is employed. US7308938 B1 describes a specific combination of silica, polypropylene glycol, amides of carboxylic acids and ethoxylated alcohols as effective defoaming and antifoaming formulations for well treatment. The application WO95/09900 A1 discloses defoamers to be added to well fluids, specifically surfactants such as fatty acid esters of polyhydroxy alcohols, where the defoamer can be dissolved in co-solvents such as diol alkyl ethers (ethoxylated alcohols).

There is however an ongoing need for stable, simple, low-cost foam-controlling agents with the ability to perform as defoamers and/or antifoamers in various application areas of gas and oilfield processes, to include GWD. There is also an associated need for these compounds to be environmentally friendly.

### OBJECT OF THE PRESENT INVENTION

It is the object of this invention to control foam formation leading to a reduced oil or gas recovery in gas and oilfield applications. Specifically, it is the object of this invention to prevent foam formation and/or destroy foam during gas and oil recovery processes.

### SUMMARY OF THE INVENTION

The present invention relates to a range of alcohol alkoxylates and their use as foam-controlling agents, specifically defoamers and/or antifoamers for aqueous phases relating to gas and oilfield applications.

The invention specifically teaches the use of alcohol alkoxylates or alcohol alkoxylate mixtures as foam-controlling agents, specifically as defoamers or antifoamers, to treat hydrocarbon-containing streams in oil or gas wells, wherein the alcohol alkoxylate or alcohol alkoxylate mixture comprises at least an alcohol alkoxylate with a molecular structure as shown in [I]:

R-O-([EO]ₘ [PO]ₙ)-H [I]

wherein
R is an alkyl group having from 4 to 10 carbon atoms,
EO is an ethoxy group,
m = 0 to 11,
PO is a propoxy group,
n = 1 to 8,
with 2 ≤ (m + n) ≤ 12,
wherein EO and PO may be in any order, either statistically distributed or in two or more blocks.

The alcohol alkoxylate is preferably an alcohol alkoxylate mixture.

According to one embodiment, R is a linear alkyl group.

According to another embodiment of the invention, R has preferably 4 to 8 carbon atoms, most preferably 6 carbon atoms.

An embodiment of the invention could include the use of the alcohol alkoxylate or the alcohol alkoxylate mixture, wherein
m = 0 to 4, preferably m = 0 to 2 and
n = 1 to 7, preferably n = 2 to 7,
with preferably 2 ≤ (m + n) ≤ 10.

According to a further embodiment, m = 0 and n = 2 to 7, preferably n = 3 to 6.

The alcohol alkoxylate or the alcohol alkoxylate mixture may be added to a hydrocarbon-containing liquid stream in a concentration of between 10 parts to 10000 parts per million parts (weight/weight). It is more preferable that the alcohol alkoxylate is added to the hydrocarbon-containing liquid stream in a concentration of between 50 parts to 5000 parts per million parts (weight/weight). It is most preferable that the alcohol alkoxylate or the alcohol alkoxylate mixture is added to the hydrocarbon-containing liquid stream in a concentration of 100 parts to 5000 parts per million parts (weight/weight).

The propoxy groups (PO) and ethoxy groups (EO) may be in any order, such as in a block structure or statistically distributed. Preferred are block structures such as first a block of propoxy groups (PO) (on the alcohol) and then a block of ethoxy groups (EO) or first the block of ethoxy groups (EO) and then the block of propoxy groups (PO). Also included in formula [I] are block structures having more than 2 blocks, such as a tri-block structure, or having 1 or 2 blocks and a sequence of statistically or randomly distributed EOs and POs. All these structures are included in formula [I].

The method according to the invention of foam-control during the processing of a hydrocarbon-containing stream, involves:
i) providing a composition comprising at least:
   an alcohol alkoxylate, wherein the alcohol alkoxylate is defined by formula [I]:

   R-O-([EO]ₘ [PO]ₙ)-H [I]

   wherein
   R is an alkyl group having from 4 to 10 carbon atoms,
   EO is an ethoxy group,
   m = 0 to 11,
   PO is a propoxy group,
   n = 1 to 8,
   with 2 ≤ (m + n) ≤ 12, preferably 2 ≤ (m + n) ≤10,
   wherein EO and PO may be in any order, either statistically distributed or in two or more blocks;
ii) contacting the hydrocarbon-containing stream with said composition, and
iii) preventing foam-formation in said hydrocarbon-containing stream; and/or defoaming the hydrocarbon-containing stream, and
iv) recovering the hydrocarbon-containing stream from the oil or gas well.

The alcohol alkoxylate is preferably an alcohol alkoxylate mixture.

The method in one embodiment comprises an alcohol alkoxylate or mixture of alcohol alkoxylates wherein R is a linear alkyl group.

In a further embodiment of the method described above, R has preferably 4 to 8 carbon atoms, most preferably 6 carbon atoms.

The invention described could also include a method wherein for the alcohol alkoxylate m = 0 to 4, preferably m = 0 to 2, and n = 1 to 7 with (m + n) ≥ 2 or m = 0 to 4, preferably m = 0 to 2, and n = 2 to 7.

Another embodiment involves a method wherein for the alcohol alkoxylate of formula (I) m = 0 and n = 2 to 7, preferably n = 3 to 6.

The method involves that the alcohol alkoxylate or the alcohol alkoxylate mixture is added to a hydrocarbon-containing liquid stream in a concentration of between 10 parts to 10000 parts per million parts (weight / weight). It is more preferable that for above described method, the alcohol alkoxylate or mixture of alcohol alkoxylates is added between 50 parts to 5000 parts per million parts (weight / weight). It is however most preferable to add the alcohol alkoxylate or mixture of alcohol alkoxylates during the method as described, as 100 parts to 5000 parts per million parts (weight / weight).

For the described method the propoxy groups (PO) and ethoxy groups (EO) may be in any order, such as in a block structure or statistically distributed. Preferred are block structures such as first a block of propoxy groups (PO) (on the alcohol) and then a block of ethoxy groups (EO) or first the block of ethoxy groups (EO) and then the block of propoxy groups (PO). Also included in formula [I] are block structures having more than 2 blocks, such as a tri-block structure, or having 1 or 2 blocks and a sequence of statistically or randomly distributed EOs and POs. All these structures are included in formula [I].

### DETAILED DESCRIPTION OF PREFERRED EMBODIMENTS

The compounds of the current invention are effective foam-controlling agents, preferably in gas and oilfield applications, specifically defoamers and/or antifoamers in gas and oilfield applications. Suitable alcohols that can be used to synthesize the above-described alcohol alkoxylates include but are not limited to linear short chain alcohols. Particularly preferred are linear C₆ alcohols.

The invention is further described with reference to the figures:
Figure 1: Defoaming performance of inventive samples compared to comparative sample, used with SOLOTERRA 971 foamer in high salinity water, across a range of concentrations (measured at 25 °C and 40 °C)
Figure 2: Antifoaming performance of inventive samples compared to a comparative sample, used with SOLOTERRA 971 foamer in high salinity water, across a range of concentrations (measured at 25 °C and 40 °C)
Figure 3: Antifoaming and defoaming performance of inventive samples compared to a comparative sample, used with SOLOTERRA 971 foamer in high salinity water, across a range of concentrations (measured at 25 °C and 40 °C)
Figure 4: Defoaming performance of inventive samples compared to a comparative sample, used with SOLOTERRA 971 foamer in low salinity water, across a range of concentrations (measured at 25 °C and 40 °C)
Figure 5: Antifoaming performance of inventive samples compared to a comparative sample, used with SOLOTERRA 971 foamer in low salinity water, across a range of concentrations (measured at 25 °C and 40 °C)
Figure 6: Antifoaming and defoaming performance of inventive samples compared to a comparative sample, used with SOLOTERRA 971 foamer in low salinity water, across a range of concentrations (measured at 25 °C and 40 °C)
Figure 7: Defoaming performance of inventive samples compared to comparative sample, used with TERRAVIS AK13ME foamer in high salinity water, across a range of concentrations (measured at 25 °C and 40 °C)
Figure 8: Antifoaming performance of inventive samples compared to a comparative sample, used with TERRAVIS AK13ME foamer in high salinity water, across a range of concentrations (measured at 25 °C and 40 °C)
Figure 9: Antifoaming and defoaming performance of inventive samples compared to ca comparative sample, used with TERRAVIS AK13ME foamer in high salinity water, across a range of concentrations (measured at 25 °C and 40 °C)

### Materials Used:

A number of alkoxylated alcohols were synthesized according to standard procedures (see Experimental section) and their properties characterized. The materials used in various tests to determine efficiency of compounds as defoamers / antifoamers are shown in Table 1:

**Table 1: Materials used to evaluate defoaming / antifoaming properties**

| | **Commercial Products: Alcohol Alkoxylate EO / PO sequence (first / sec.)** | **Alcohol carbon chain length** | **Alcohol structure** | **Propoxylation (PO) degree (n)** | **Ethoxylation (EO) degree (m)** |
|---|---|---|---|---|---|
| **Comparative sample** | MARLOX MO124 (EO/PO) | C₁₂-C₁₄ | Linear | 4 | 2 |
| **Inventive samples** | DIONIL TR12 (EO/PO) | C₆ | Linear | 2 | 1 |
| | DIONIL RT12 (PO/EO) | C₆ | Linear | 1 | 2 |
| | DIONIL TR23 (EO/PO) | C₆ | Linear | 3 | 2 |
| | DIONIL TR27 (EO/PO) | C₆ | Linear | 7 | 2 |
| | DIONIL P3 (PO) | C₆ | Linear | 3 | 0 |

| | | | | | |
|---|---|---|---|---|---|
| *The commercial products are marketed by* Sasol Chemie GmbH & CO KG. | | | | | |

Table 2 lists the foamers (surfactants) that were used for the various defoaming / antifoaming experiments.

**Table 2: Commercial foamers used for defoaming / antifoaming experiments**

| NAME | DESCRIPTION |
|---|---|
| SOLOTERRA 971 | Short chain (C₈) alcohol ether carboxylate |
| TERRAVIS AK13ME | Short chain (C₆₋₁₀) alcohol ether sulfate |

| | |
|---|---|
| *These foamers are available from* Sasol Chemie GmbH & CO KG | |

Table 3 shows the content of the low and high salinity water(brines) that were used.

**Table 3: Low and high salinity water**

| | Low TDS* (g/l) | High TDS (g/l) |
|---|---|---|
| pH | 4.5 | 4.5 |
| NaCl | 1 | 142.2 |
| CaCl₂ | - | 30.5 |
| MgCl₂ | - | 7.9 |

| | | |
|---|---|---|
| * *TDS* = *Total Dissolved Solids* | | |

### EXPERIMENTAL SECTION

### Synthesis of alkoxylated (PO/EO) alcohols used for the experiments:

Linear C₆ alcohols were propoxylated and ethoxylated utilizing well known alkoxylation catalysts such as double metal cyanide (DMC) or KOH catalysts. The samples were prepared in a 600 ml Parr reactor using the alkoxylation catalyst of choice.

For PO / EO alkoxylated products, the alcohols were propoxylated using purified propylene oxide (typically ≥ 99.9 wt.%) at 130 to 150 °C and 40 to 60 psig and subsequently ethoxylated using purified ethylene oxide (typically ≥ 99.9 wt.%) at 150 to 160 °C and 40 to 60 psig in a single, continuous run. The PO-only alkoxylated alcohol was prepared in a similar way without the ethoxylation step.

The EO / PO alkoxylated alcohols were prepared as described above, with as a first step ethoxylation using purified ethylene oxide, and subsequent propoxylation using purified propylene oxide at similar reaction conditions stated for the PO/ EO products above.

### GENERAL EXPERIMENTAL PROCEDURE USED

•
1. 200 ml test fluids (200 ml high / low salinity water + 5 ml white spirit low aromatic hydrocarbon phase (LINPAR 1013)) were transferred to a 1000 ml measuring cylinder (h = +/ 450 mm, Ø = 60 mm), and 1 ml / 0.5 ml (5000 ppm calculated on water volume) of foamer (SOLOTERRA 971, potassium (K) salt, 50 % active matter (a.m.) at pH = 7 / TERRAVIS AK13ME), monoethanolamine (MEA) salt, >95 % a.m. at pH = 7) was added at room temperature.
2. A nitrogen sparge (30 litres/hr) was applied to the cylinder via a P2 gas dispersion tube. After the foam column reached the 400 ml mark, the sparge was removed and the foam-controlling agent (concentration range: 100 to 5000 ppm) was added to the cylinder. The time necessary to fully observe foam collapse was measured (T1); and is an indication of the sample's defoaming ability. The following success criterion was used: T1 ≤ 1 minute = PASS.
3. The nitrogen sparge was re-applied and the height of the foam (H) was noted after 2 minutes of sparging. A value for H of up to 400 ml is interpreted to be ACCEPTABLE PERFORMANCE and a good indication of the sample's antifoaming ability. The time necessary to fully observe foam collapse was again measured (T2), with the value of T2 ≤ 1 minute interpreted to PASS the test as antifoamer of defoamer.

The following experiments were performed, applying the general procedure described above:

**Table 4: Summary of all experiments carried out, together with experimental conditions used (for each experiment, T1, H and T2 were determined).**

| | **INVENTIVE/ COMPARATIVE** | **ALKOXYLATED ALCOHOL** | **TEMP (°C)** | **CONCENTRATION (ppm)** | | | | | **SALINITY OF WATER** | | **FOAMING SURFACTANT** |
|---|---|---|---|---|---|---|---|---|---|---|---|
| | | | | **5000** | **2500** | **1000** | **500** | **100** | **HIGH TDS** | **LOW TDS** | |
| 1 | Inventive | DIONIL TR12 | 25°C | X | X | X | - | - | X | | SOLOTERRA 971 |
| | | | 40°C | X | X | X | X | X | | | |
| | | DIONIL RT12 | 25°C | X | X | X | X | - | | | |
| | | | 40°C | X | X | X | X | - | | | |
| | | DIONIL TR23 | 25°C | X | X | - | - | - | | | |
| | | | 40°C | X | X | X | X | X | | | |
| | | DIONIL TR27 | 25°C | X | X | - | - | - | | | |
| | | | 40°C | X | X | X | X | X | | | |
| | Comparative | MARLOX MO124 | 25°C | X | X | X | X | X | | | |
| -2 | Inventive | DIONIL TR12 | 25°C | X | X | X | X | - | | X | SOLOTERRA 971 |
| | | | 40°C | X | X | X | - | - | | | |
| | | DIONIL TR23 | 25°C | X | X | X | - | - | | | |
| | | DIONIL TR27 | 25°C | X | X | X | X | - | | | |
| | | | 40°C | X | X | X | - | - | | | |
| | | DIONIL P3 | 25°C | X | X | X | X | - | | | |
| | | | 40°C | X | X | X | X | - | | | |
| | Comparative | MARLOX MO124 | 25°C | X | X | X | X | X | | | |
| | | | 40°C | X | X | X | X | X | | | |
| 3 | Inventive | DIONIL TR12 | 25°C | X | X | X | X | - | X | | TERRAVIS AK 13ME |
| | | | 40°C | X | X | X | X | - | | | |
| | | DIONIL RT12 | 25°C | X | X | | | | | | |
| | | | 40°C | X | X | - | - | - | | | |
| | | DIONIL TR23 | 25°C | X | X | X | - | - | | | |
| | | | 40°C | X | X | X | X | X | | | |
| | | DIONIL TR27 | 25°C | X | X | | | | | | |
| | | | 40°C | X | - | - | - | - | | | |
| | Comparative | MARLOX MO124 | 25°C | - | - | X | - | X | | | |
| | | | 40°C | - | - | - | - | X | | | |

It should be appreciated that when it is indicated in the Table above, that a specific experiment was carried out by the "X" and no bar is observed in the corresponding graph, the value recorded was zero, indicating excellent performance as foam-controlling agent under the conditions.

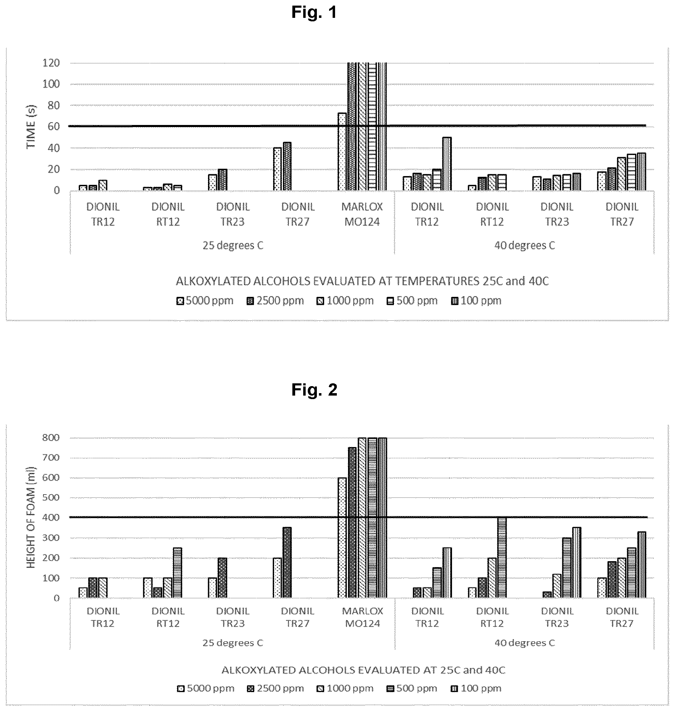

Figure 1: Defoaming performance of inventive samples compared to comparative sample, used with SOLOTERRA 971 foamer in high salinity water, across a range of concentrations (measured at 25 °C and 40 °C)

Foam collapse within 60s indicates good defoaming performance. The inventive samples evaluated performed well when used together with the SOLOTERRA 971 foaming surfactant in high salinity water, across a wide range of concentrations. In contrast, the longer carbon chain comparative sample did not pass the test requirements.

Figure 2: Antifoaming performance of inventive samples compared to a comparative sample, used with SOLOTERRA 971 foamer in high salinity water, across a range of concentrations (measured at 25 °C and 40 °C) - see Experimental 'H' description; experiment 1 in Table 4.

Good antifoaming properties are indicated by not exceeding 400 ml height of foam when the N₂ sparger was re-applied. All the inventive samples demonstrated good performance with regards to antifoaming properties under the specific experimental conditions applied, whereas the comparative sample failed the minimum requirements.

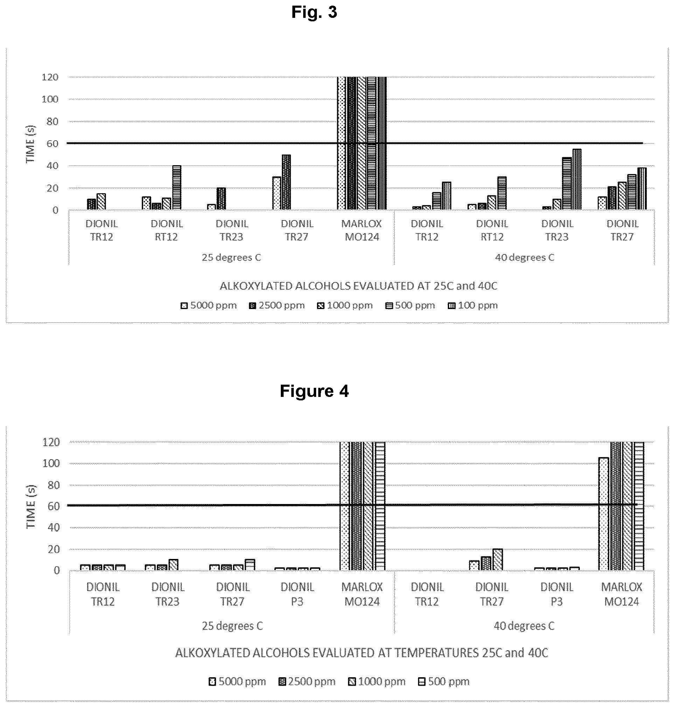

Figure 3: Antifoaming and defoaming performance of inventive samples compared to a comparative sample, used with SOLOTERRA 971 foamer in high salinity water, across a range of concentrations (measured at 25 °C and 40 °C) - see Experimental 'T2' description; experiment 1 in Table 4.

Exceptionally good antifoaming and defoaming properties were displayed by the inventive samples in a high salinity environment at both low and high temperatures, together with the SOLOTERRA 971 surfactant used as foamer. Foam collapse occurred for all inventive samples in less than 60 seconds. The comparative sample did not pass the base line test requirements as a good antifoamer / defoamer.

Figure 4: Defoaming performance of inventive samples compared to comparative sample, used with SOLOTERRA 971 foamer in low salinity water, across a range of concentrations (measured at 25 °C and 40 °C) - see Experimental 'T1' description; experiment 2 in Table 4.

As observed for the high salinity environment described in Figure 1, the inventive samples evaluated performed well when used together with the SOLOTERRA 971 foaming surfactant in low salinity water, again across a wide range of concentrations. DIONIL TR12 in particular displayed exceptional performance. The longer carbon chain comparative sample did not pass the test requirements.

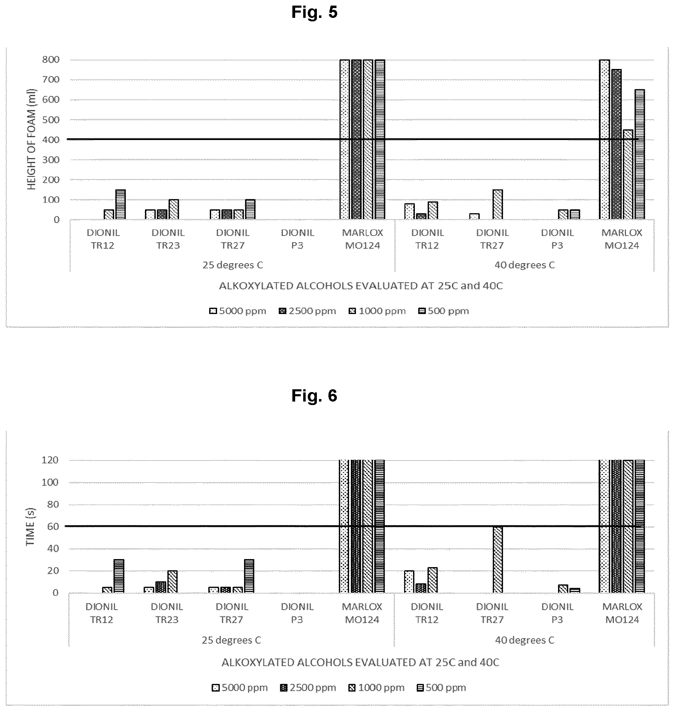

Figure 5: Antifoaming performance of inventive samples compared to a comparative sample, used with SOLOTERRA 971 foamer in low salinity water, across a range of concentrations (measured at 25 °C and 40 °C) - see Experimental 'H' description; experiment 2 in Table 4.

All the inventive samples demonstrated good antifoaming performance (not exceeding 400 ml height of foam on application of the N₂ sparger) with regards to antifoaming properties under the specific experimental conditions applied, whereas the comparative sample failed the minimum requirements.

Figure 6: Antifoaming and defoaming performance of inventive samples compared to a comparative sample, used with SOLOTERRA 971 foamer in low salinity water, across a range of concentrations (measured at 25 °C and 40 °C) - see Experimental 'T2' description; experiment 2 in Table 4.

Exceptionally good antifoaming and defoaming properties (foam collapse within 60 seconds) were displayed by the inventive samples in a low salinity environment at both low and high temperatures, together with the SOLOTERRA 971 surfactant used as foamer. As demonstrated before, the comparative sample did not pass the base line test requirements as a good antifoamer / defoamer.

Figure :7 Defoaming performance of inventive samples compared to comparative sample, used with TERRAVIS AK 13ME foamer in high salinity water, across a range of concentrations (measured at 25 °C and 40 °C) - see Experimental 'T1' description; experiment 3 in Table 4.

The inventive samples evaluated also performed well when used together with the TERRAVIS foaming surfactant in high salinity water, across a wide range of concentrations. Both DIONIL TR12 and DIONIL TR13 in particular displayed exceptional performance. The longer carbon chain comparative sample did not pass the test requirements.

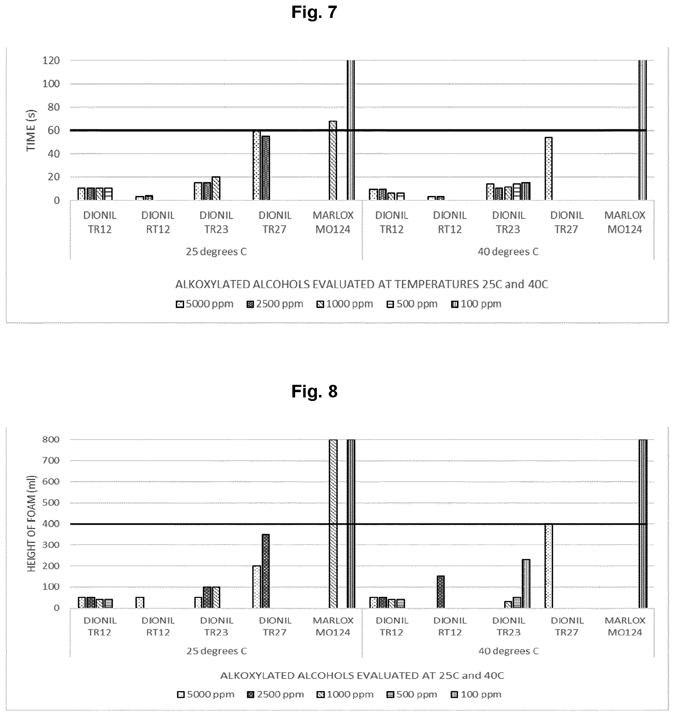

Figure 8: Antifoaming performance of inventive samples compared to a comparative sample, used with TERRAVIS AK 13ME foamer in high salinity water, across a range of concentrations (measured at 25 °C and 40 °C) - see Experimental 'H' description; experiment 3 in Table 4.

As previously discussed, good antifoaming properties are indicated by not exceeding 400 ml height of foam when the N₂ sparger was re-applied. All the inventive samples demonstrated good performance with regards to antifoaming properties under the specific experimental conditions applied, whereas the comparative sample failed the minimum requirements.

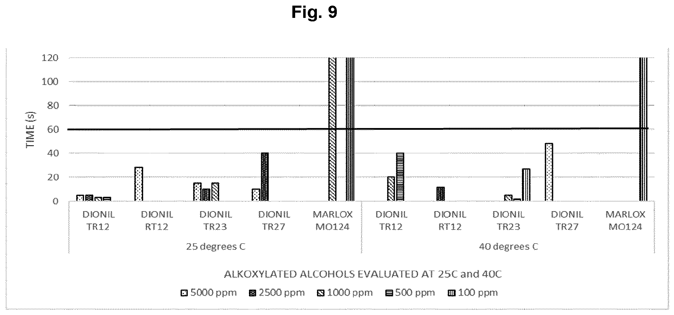

Figure 9: Antifoaming and defoaming performance of inventive samples compared to a comparative sample, used with TERRAVIS AK 13ME foamer in high salinity water, across a range of concentrations (measured at 25 °C and 40 °C) - see Experimental 'T2' description; experiment 3 in Table 4.

Exceptionally good antifoaming and defoaming properties were displayed by the inventive samples (in particular, DIONIL TR12 and DIONIL TR23) in a high salinity environment at both low and high temperatures, together with the TERRAVIS surfactant used as foamer. Foam collapse occurred for all inventive samples in less than 60 seconds. The comparative sample did not pass the base line test requirements as a good antifoamer / defoamer.

## Claims

1. The use of an alcohol alkoxylate as a foam-controlling agent to treat hydrocarbon-containing streams in oil or gas wells, wherein the alcohol alkoxylate is defined by formula [I]:
R-O-([EO]ₘ [PO]ₙ)-H [I]
wherein
R is an alkyl group having from 4 to 10 carbon atoms,
EO is an ethoxy group,
m = 0 to 11,
PO is a propoxy group,
n = 1 to 8,
with 2 ≤ (m + n) ≤ 12,
wherein EO and PO may be in any order, either statistically distributed or
in two or more blocks.

2. The use of the alcohol alkoxylate of claim 1, wherein R is a linear alkyl group.

3. The use of the alcohol alkoxylate of any of the claims above, wherein
R has 4 to 8 carbon atoms, preferably 6 carbon atoms.

4. The use of the alcohol alkoxylate of any of the claims above, wherein
m = 0 to 4, preferably m = 0 to 2 and
n = 1 to 7, preferably n = 2 to 7.

5. The use of the alcohol alkoxylate of any of the claims above, wherein
m = 0 and
n = 2 to 7, preferably n = 3 to 6.

6. The use of the alcohol alkoxylate of any of the claims above, wherein
for m and n it applies 2 ≤ (m + n) ≤ 10.

7. The use of the alcohol alkoxylate of any of the claims above, wherein the alcohol alkoxylate is added to a hydrocarbon-containing liquid stream in a concentration of between 10 parts to 10000 parts per million parts, more preferably between 50 parts to 5000 parts per million parts, most preferably 100 parts to 5000 parts per million parts.

8. The use of the alcohol alkoxylate of any of the claims above, wherein the alcohol alkoxylate acts as a defoamer in a gas well deliquification process.

9. A method of foam-control during the processing of a hydrocarbon-containing stream, said method comprising:
i) providing a composition comprising at least:
an alcohol alkoxylate, wherein the alcohol alkoxylate is defined by formula [I]:
R-O-([EO]ₘ [PO]ₙ)-H [I]
wherein
R is an alkyl group having from 4 to 10 carbon atoms,
EO is an ethoxy group,
m = 0 to 11,
PO is a propoxy group,
n = 1 to 8,
with 2 ≤ (m + n) ≤ 12,
wherein EO and PO may be in any order, either statistically distributed or in two or more blocks.
ii) contacting the hydrocarbon-containing stream with said composition, and
iii) preventing foam-formation in said hydrocarbon-containing stream; and/or defoaming the hydrocarbon-containing stream, and
iv) recovering the hydrocarbon-containing stream from the oil or gas well.

10. The method of claim 9, wherein
R is a linear alkyl group and/or
R has 4 to 8 carbon atoms, most preferably 6 carbon atoms.

11. The method of claim 9 or 10, wherein
m = 0 to 4, preferably m = 0 to 2, and
n = 1 to 7, preferably n = 2 to 7.

12. The method of any of the claims 9 to 11, wherein
m = 0 and
n = 2 to 7, preferably n = 3 to 6.

13. The method of any of the claims 9 to 11, wherein
for m and n it applies 2 ≤ (m + n) ≤ 10.

14. The method of any of the claims 9 to 13, wherein
the alcohol alkoxylate is added to a hydrocarbon-containing liquid stream in a concentration of between 10 parts to 10000 parts per million parts, more preferably between 50 parts to 5000 parts per million parts, most preferably 100 parts to 5000 parts per million parts.

15. The method of any of the claims 9 to 13, wherein
the alcohol alkoxylate acts as a defoamer, preferably as a defoamer in a gas well deliquification process.
